(19) 

Europäisches Patentamt
European Patent Office
Office européen des brevets

(11)  **EP 2 996 360 B1**

(12)  **EUROPEAN PATENT SPECIFICATION**

(45) Date of publication and mention
of the grant of the patent:
**18.11.2020  Bulletin 2020/47**

(51) Int Cl.:
*H04W 12/06* (2009.01)       *H04L 29/06* (2006.01)
*G06K 9/00* (2006.01)        *G06T 7/20* (2017.01)

(21) Application number: **14794046.4**

(86) International application number:
**PCT/CN2014/076803**

(22) Date of filing: **05.05.2014**

(87) International publication number:
**WO 2014/180293 (13.11.2014 Gazette 2014/46)**

(54) **SYSTEM FOR MATCHING SIGNATURES ON THE BASIS OF MOTION SIGNATURE INFORMATION**

SYSTEM ZUR ANPASSUNG VON UNTERSCHRIFTEN AUF DER BASIS VON
BEWEGUNGSUNTERSCHRIFTSINFORMATIONEN

SYSTÈME DE MISE EN CORRESPONDANCE DE SIGNATURES SUR LA BASE D'INFORMATIONS
DE SIGNATURE DE MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.05.2013   CN 201310165256**

(43) Date of publication of application:
**16.03.2016   Bulletin 2016/11**

(73) Proprietor: **Hangzhou Zhileng Technology Co. Ltd.
Zhejiang 310020 (CN)**

(72) Inventors:
• **LI, Dongge
South Barrington, IL 60010 (US)**

• **LI, Chengyu
Xi'an
Shaanxi 710000 (CN)**

(74) Representative: **Potter Clarkson
The Belgrave Centre
Talbot Street
Nottingham NG1 5GG (GB)**

(56) References cited:
**WO-A1-2012/113272      CN-A- 102 143 483
CN-A- 102 292 979      CN-A- 102 333 313
US-A1- 2007 041 058      US-A1- 2008 244 752
US-A1- 2009 320 123      US-A1- 2013 050 106
US-A1- 2013 076 645**

**Description**

Technical Field

The invention relates to the field of computer technology, especially a technology that matches signatures based on motion signature information.

Background

A motion signature is generated based on a motion pattern, wherein said motion pattern may be captured via various sensors such as MEMS, imaging device, etc. The corresponding motion signature may be used in applications as a password or a means for matching to enable a verification device to confirm whether a motion pattern generation device is on-site. For example, motion signatures can be used as passwords for unlocking and activating devices, such as door control and payment devices, etc. Motion trajectory codes may be used as command codes, such as for transmission and reception of data, execution and verification of operations, etc.

US 2009/320123 describes a method and apparatus that authenticate a user of a mobile device with motion sensors. During a learning session, the user initializes the mobile device by providing a motion sample. The mobile device extracts motion features that are unique to the user and converts them to parity bits and to a password shadow. During a recognition session, a motion pattern is gathered from the user moving the mobile device as if it were a virtual pen. The mobile device then uses the stored parity bits to correct small differences between motion patterns exhibited by the same user at different times. The mobile device converts the corrected motion pattern into a motion password that is compared with the stored password shadow

US 2007/041058 describes a device for converting digital images taken along a predefined movement pattern into a control signal. The device comprises an image input device having a connection to a image sensor. The image input device is adapted to receive the digital images captured during the displacement of the image sensor and determine whether motion measured therein corresponds to any prestored movement pattern, that is to say to a predefined gesture.

US 2013/050106 describes a method and apparatus for recognizing a motion pattern formed by a continued contact surface. The method comprises receiving a motion pattern as input from a user, comparing pattern information of the motion pattern with pattern information of a preset release pattern, and determining a mismatch level of the motion pattern according to the comparison result.

Therefore, improving the accuracy and efficiency of matching motion signatures has become a problem in need of an urgent solution in this field.

Summary

The present invention aims to provide a system for matching signatures based on motion signature information as defined by the appended claims.

Compared with the prior art, the present invention matches the signatures based on the motion signature information corresponding to the signatures that are to be matched, thus increasing the accuracy and efficiency in signature matching and enhancing user experience.

Brief Description of Figures

Other features, objectives, and advantages of the present invention will become apparent upon consideration of the following detailed description of non-limiting embodiments and the accompanying drawings.

FIG. 1 illustrates a device diagram of matching signatures based on motion signature information according to an aspect of the present invention.

FIG. 2 illustrates a device diagram of matching signatures based on motion signature information according to a preferred embodiment of the present invention.

FIG. 3 illustrates a method flow chart of matching signatures based on motion signature information according to another aspect of the present invention.

FIG. 4 illustrates a method flow chart of matching signatures based on motion signature information according to a preferred embodiment of the present invention.

Identical or similar symbols in the drawings indicate identical or similar units.

Detailed Description of the Preferred Embodiment

The description that follows incorporates the aforementioned drawings to further elaborate on the details of this invention.

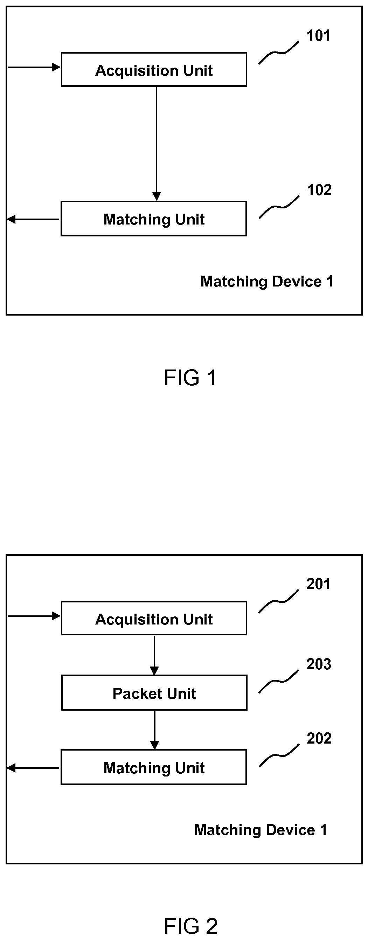

FIG. 1 illustrates a device diagram of matching signatures based on motion signature information according to an aspect of the present invention. The matching device 1 includes an acquisition unit **101** and a matching unit **102.**

Herein, examples of the matching device 1 include but are not limited to network devices, controlled devices, etc. that are to be matched. If the matching device 1 is a network device, then it acquires the first signature sent by a first generation device and at least one second signature sent by a second generation device and then matches them. If the matching device 1 is a controlled device that is to be matched, then it acquires at least one second signature sent by a remote device such as a controlling device, etc. Matching device 1 then matches the at least one second signature with an acquired first signature. It is understood by those skilled in the art that, while the above matching device has been described only by way of example, other existing or future matching devices may be applicable to this invention and should fall within the scope of protection of the present invention.

The acquisition unit **101** acquires a first signature and at least one second signature that are to be matched, wherein the first signature is generated based on the motion signature information corresponding thereto. Specifically, the modes of acquiring the first signature in acquisition unit **101** include but are not limited to:

> 1) acquiring a first signature generated from motion signature information, wherein said motion signature information is derived from motion information captured by an imaging device coupled to matching device 1.
> 2) receiving a first signature sent by the first generation device via WIFI, Bluetooth, Infrared, Internet, etc.

Herein, the first signature is generated based on the motion signature information corresponding thereto via encoding methods such as Fourier shape descriptor method, geometric parameter method, shape invariant moment method, rotation function method, wavelet descriptor method, etc. The mode of acquiring the at least one second signature in the acquisition unit **101** include but not limited to:

> 1) receiving at least one second signature sent by at least one second generation device or remote device, etc. via WIFI, Bluetooth, Infrared, Internet, etc..
> 2) selecting at least one second signature randomly or sequentially in a signature table of matching device 1 based on the first signature.

Herein, if the signature table holds a predetermined number of signatures or signatures generated within a predetermined time period, said signatures may be referred to as predetermined signatures. Signatures in the table may also have been sent by the corresponding remote devices. The signature table may be located within matching device 1 or within a third party device connected with matching device 1 through network.

Herein, at least one signature is acquired by MEMS sensor. Alternatively, at least one first signature is acquired by imaging device, wherein, the imaging device as described includes but are not limited to two-dimensional imaging device, three-dimensional imaging device, etc.

For example, if matching device 1 is a network device, a first generation device captures through its imaging device a motion pattern, such as the motion pattern of a moving second generation device, and generates a first signature based on motion signature information from the motion pattern. Subsequently, the first generation device sends the first signature to matching device 1. The second generation device generates a corresponding second signature through its MEMS sensor, such as through detection of its motion direction, velocities, accelerations etc., and sends the second signature to matching device 1. The acquisition unit **101** of matching device 1 thus acquires the first signature and the second signature that are to be matched.

As another example, if matching device 1 is a controlled device, etc. that is to be matched, a second generation device generates a corresponding second signature through its MEMS sensor, such as through detection of its motion direction, velocities, accelerations, etc., and sends the second signature to matching device 1. Acquisition unit **101** of matching device 1 thus acquires the second signature, as well as captures through its imaging device a motion pattern of the moving second generation device and generates a first signature based on the motion signature information of the motion pattern. Acquisition unit **101** takes the generated first signature and the received second signature as the first signature and the second signature that are to be matched.

It is understood by those skilled in the art that, while the above acquisition mode of the first signature and the second signature has been described only by way of example, other existing or future acquisition modes of the first signature and the second signature may be applicable to this invention and should fall within the scope of protection of the present invention.

The matching unit **102** matches the first signature and the second signature based on their motion signature information to acquire a corresponding match result. Specifically, the matching unit **102** matches the first signature and the second signature based on the motion signature information of the first signature such as image feature points, image line segment features, image closed contour, motion trajectory information, velocities, accelerations and relative changes in motion directions, etc. to acquire a corresponding match result. For example, when the first signature based on the corresponding motion trend information is encoded as 1233, the acquisition unit **101** acquires its first signature and selects a predetermined second signature from matching device 1 as 1234. Matching unit **102** matches the first signature and the second signature accordingly, and determines that the two signatures do not match. Preferably, matching device 1 can also predetermine a tolerance, so that the two signatures can be determined as a match when they fall within the tolerance. Otherwise, the match has failed. For example, if the predetermined second signature is 1234 and the first signature is 1232, then the match has failed. If the first signature is 1233, then the match has succeeded. It is understood by those skilled in the art that, while the numbers here have been described only by way of example, they should not be considered as any limitation to the present invention.

As another example, when a second signature is generated based on the motion signature information corresponding thereto, matching unit **102** matches a first signature and the second signature based on the motion signature information of the first signature and the second signature to acquire a corresponding match result.

It is understood by those skilled in the art that, while the above modes of matching a first signature and a second signature has been described only by way of example, other existing or future modes of matching a first signature and a second signature may be applicable to this invention and should fall within the scope of protection of the present invention.

In one embodiment, matching unit **102** comprises a match unit (not shown) and a determining unit (not shown). The match unit matches a first signature and at least one second signature based on their motion signature information to acquire at least one corresponding match value. The determining unit determines the match result based on at least one corresponding match value and a predetermined match threshold.

Herein, matching device 1 may also predetermine a match threshold, so that when the feature matching (feature similarity) of the first signature and the second signature exceeds the predetermined match threshold, the two signatures are determined as a match.

Specifically, the match unit matches the first signature and the second signature based on the motion signature information of the first signature and the second signature to acquire a corresponding matching value, such as the feature similarity of the two signatures. The determining unit determines the match result based on the feature matching and the predetermined match threshold. For example, when the feature matching (feature similarity) exceeds the match threshold, the first signature and the second signature are determined as a match. When its feature matching (feature similarity) is less than the match threshold, a match of the first signature with the second signature has failed.

In another embodiment, the matching unit **102** also comprises a match unit (not shown) and a determining unit (not shown). The match unit matches a first signature and at least one second signature based on their motion signature information to acquire at least one corresponding match value. The determining unit selects the largest from the at least one corresponding match value as the match result.

For example, if matching device 1 is a controlled device, etc. that is to be matched, it may receive multiple second signatures sent by multiple remote device, etc. The match unit matches the first signature of matching device 1 with the multiple second signatures based the motion signature information of the first signature and the multiple received second signatures to acquire multiple corresponding match value, such as the feature matching (feature similarity) between two signatures. The determining unit selects the largest from the corresponding match values and determines the remote device corresponding to the largest match value as the controlling device. Alternatively, the determining unit filters the multiple match values for those that exceed a predetermined match threshold, and then determines the remote device corresponding to the largest match value amongst the filtered match values as the controlling device.

The motion signature information of the signature includes but is not limited to motion trajectory feature information, motion trend feature information etc.

In a preferred embodiment, motion signature information comprises motion trajectory feature information, wherein, signature matching as described herein shall be based on at least one of the following:

- image feature of the motion trajectory,
- image line segment feature of the motion trajectory,
- image closed contour of the motion trajectory.

Specifically, when motion signature information comprises motion trajectory feature information, the matching unit **102** matches the first signature and the second signature based on image feature, image line segment feature and image closed contour, etc. that comprise motion trajectory information. For example, regarding motion signature information based on motion pattern such as motion trajectory feature information, with the first signature encoded, the matching unit **102** calculates the feature matching (feature similarity) of the first signature and the second signature by a matching method based on image shape feature. Herein, encoding methods include but are not limited to Fourier shape descriptor method, geometric parameter method, shape invariant moment method, rotation function method, wavelet descriptor method, etc. Herein, image shape feature matching methods include matching based on image feature, image line segment feature, image closed contour and other advanced feature matching, etc. Wherein, image feature matching methods include minimum mean square error matching, fast matching, Haussdorff point distance matching, etc. Matching methods based on image line segment features include HYPER matching, Chafer matching etc. Matching methods based on image closed contour features include Fourier shape descriptor and HRP descriptor. Matching methods based on other advanced features include relaxation method, energy minimizer, etc.

It is understood by those skilled in the art that, while the above matching methods have been described only by way of example, other existing or future matching methods may be applicable to this invention and should fall within the scope of protection of the present invention.

In another preferred embodiment, motion signature information comprises motion trend feature information, wherein, the matching as described shall be based on at least one of the following:

- matching the first signature and the second signature correspondingly and respectively,
- detecting and matching the second signature based on the first signature.

For example, a generation device, such as the first generation device and the second generation device, etc., encodes using the motion trend feature information such as the corresponding motion velocities and motion directions relative changes, etc. The matching unit **102** can match the first signature and the second signature correspondingly and respectively, for example, when the encoding lengths of the first signature and the second signature that are to be matched are the same or similar. When matching correspondingly and respectively can be performed, two signatures match if their encoding are identical. The two signatures do not match if their encoding are different. Alternatively, the matching unit **102** can match within a certain fault tolerance. Two signatures match if the feature matching (feature similarity) exceeds a predetermined match threshold. A feature matching (feature similarity) lower than the predetermined match threshold indicates that a match has failed.

As another example, the matching unit **102** detects and matches the second signature based on the first signature, when the encoding lengths of the first signature and the second signature that are to be matched are quite different. Detecting and matching can be performed, such as via before-after translation of the shorter signature in a certain location to acquire the best match as the match result of the two. Herein, string matching can be performed for detecting and matching, which includes but is not limited to BF Algorithm, KMP Algorithm, BM Algorithm, Sunday Algorithm, or other dynamic programming algorithms (e.g., Dynamic Time Wrapping), etc.

Herein, the generation device can eliminate the encoding influence caused by different devices detection through encoding the speed, direction relative trend or a combination of the two, such as using up (+1), even (0), down (-1), etc., to describe motion trend information, etc.

Preferably, the matching unit **102** pre-matches the first signature and the second signature to acquire the pre-match result based on their auxiliary feature information. The first signature and the second signature may then be matched based on motion feature information and the pre-match result to acquire the corresponding match result.

Wherein, the auxiliary feature information as described comprises at least one of the following:

- generation time information of the signature,
- generation location information of the signature,
- generation device information corresponding to the signature.

Specifically, acquisition unit **101** generates a first signature that is to be matched based on the motion pattern captured by its imaging device and the motion feature information of the motion pattern. Alternatively, acquisition unit **101** receives the first signature that is to be matched sent by a first generation device, wherein the first signature is one based on the motion feature information of the corresponding motion pattern. Then, matching unit **102** pre-matches the first signature and the second signature to acquire a pre-match result based on the their auxiliary feature information, such as the generation time information, the generation location information of the signatures, the corresponding generation device (the matching device 1 or the first generation device) information of the first signature. For example, information on whether the generation time and generation location of the first signature and the second signature are similar, as well as information on whether or not the second signature and the generation device that generated the first signature have a connection record, may be incorporated into the matching of the first signature and the second signature to acquire the corresponding match result based on the motion feature information and the pre-match result. For example, the matching unit **102** matches the first signature and the second signature based on motion feature information and determines initially the two match. Only if the generation time or the generation location of the first signature and the second signature are similar, the matching unit **102** determines that the two signature actually match.

Herein, the generation location information of the signature may be acquired by means of the device's GPS, WIFI, communication base, etc. The matching device 1 can only match results within a certain time and location range. Two signatures will not match if this condition is not satisfied. When matching device 1 receives multiple signatures, the matching can be promptly limited to the ones within the same time and location range to accelerate matching and searching as well as to reduce mismatch.

Herein, information related to a generation device that corresponding to a signature includes but is not limited to said device's IP address, ID, connection record, connection frequency, etc.

Similar to the service time and location information, matching device 1 can match device(s) close to the network location first. The locations close to the network comprise terminals in the same subnet, gateway or router. For example, a device with IP 124.10.2.01 is likely connected to the device with IP 124.10.2.02. The matching device 1 matches the device(s) close to the network location first. Alternatively, when there are multiple match candidates, device(s) close to the network location may be assigned matching priority. Thus, devices close to the network location connect faster and easier.

A device ID is a unique device code, such as MAC address, CPU serial number, etc. that can be used to uniquely identify a device. With a device ID, the matching device 1 can uniquely identify a possible connection device. Thus, the matching device 1 can record the permission setting between device connections, such as the device ID or a device type that is permitted or not permitted to connect. The setting can be set by a user or set by default based on the device type. The matching device 1 can also record the connected device ID and save them. When a device sends motion signature that is to be matched, matching device 1 can detect all devices capable or incapable of connection with itself, then only searches and matches the signatures from the device capable of connection or eliminates the signatures from the device incapable of connection. If there are more candidate match signatures, the system shall prioritize the match to the frequently connected devices. For example, a device that has in the past (or recently) connected can be used for first selecting the device signature for matching. Fast connection can be established if they match and no further search is necessary. Further, the matching device 1 can record the connection frequency (or number of times) between devices, which can be used for selecting signatures for priority matching, so that signatures of the devices with connection frequency higher than the threshold are matched first. The above information can also be used to perform weighted calculations in feature matching, such as:

$$\text{Final feature matching} = w1*\text{initial feature matching} + w2*\text{connection frequency}$$

Herein, initial feature matching is the feature matching between the first signature and the second signature acquired as part of the matching in matching unit **102**, the final feature matching is the feature matching acquired by final calculation, the connection frequency is the frequency at which the first signature and the second signature corresponding devices connect, and w1 and w2 are weightings.

It is understood by those skilled in the art that, while the above auxiliary feature information has been described only by way of example, other existing or future auxiliary feature information may applicable to this invention and should fall within the scope of protection of the present invention.

Preferably, matching device 1 also comprises a pre-processing device (not shown). The pre-processing device pre-processes a first signature and a second signature to acquire a pre-processed first signature and a pre-processed second signature. The matching unit 102 matches the pre-processed first signature and the pre-processed second signature based on motion feature information to acquire the corresponding matching result, wherein, the pre-processing shall comprise a least one of the following:

- mapping,
- decoding,
- encoding.

Specifically, the pre-processing device performs pre-processing such as mapping, decoding, encoding, etc. on the first signature and the second signature to acquire a pre-processed first signature and a pre-processed second signature. For example, the pre-processing device maps a three-dimensional signature to a two-dimensional signature, decoding one of the encoded signature to match with another un-encoded signature, or encoding one of the un-encoded signature to match with another encoded signature. As another example, when the first signature and the second signature are differently encoded, the pre-processing device can decode one of the signatures and re-encode the signature with the encoding method of the other signature. Then, the two signature are encoded with the same method which simplifies the matching that follows. Subsequently, the matching unit **102** matches the pre-processed first signature and the pre-processed second signature based on motion feature information to acquire a corresponding matching result.

Herein, at least the first signature is generated based on the motion signature information of the corresponding motion pattern, such as via motion captured by a two-dimensional or three-dimensional imaging device, while the second signature can be generated by using MEMS, etc. sensors that detect motion in three-dimensional space. Since different devices have different motion detection mode and angle, they generate different signatures as well. Using global features, prominent features, relative size, and affine invariant features has certain advantages, such that no significant change in signature hardware and capture angle would result. For example, the sloshing frequency of global features, the folding point time of prominent features, location, etc. would not be changed significantly as a result. Also, relative size (up, even, down) can better tolerate the error and noise interference caused by precision in detection.

For example, the pre-processing device projects the motion or signature from the three-dimensional space onto two-dimensional space and re-generates signature (especially pattern or perpendicular direction or direction towards the equipment). The signature generated three-dimensional motion captured by MEMS and the signatures generated by the different imaging devices are different on the reflection/projection plane. Imaging devices at different angles have different two-dimensional image plane with specific projection relationship. As long as it has a relative angle, the conversion can be acquired by simple geometrical relationship.

For signatures recording two- (three-) dimensional trajectory and corresponding timing values at various positions, they may be mapped from three-dimensional plane to two-dimensional plane or mapped between different two-dimensional planes. The imaging device's direction may be easily obtained if the imaging device has Compass, etc. type of orientation sensor. The positional relation of the three-dimensional and two-dimensional image planes may be determined. Likewise, the relative direction of any two imaging devices can be easily acquired. If there is no direction sensor, the traditional image calibration method can also detect the relative direction between different imaging device planes (relative calibration) or the absolute position relation of any imaging device relative to the earth (absolute calibration).

Once the signatures from different planes are converted into the same plane, their matching effect of the same motion can be more stable. If the plane relationship of two signatures is unknown, the search maximum matching method can be used. When the two signatures generated by the same motion are mapped onto the same plane, they have the maximum matching similarity. Thus, a pre-processing device can map one of the signatures at a certain angle and distance (amplification factor) in a certain change range and interval step-by-step (such as clockwise and counterclockwise rotate within 45 degrees by every 5 degrees). For every mapping of a signature, it is matched with another signature once and their similarity for each mapping is recorded. Ultimately, the maximum similarity value is taken as the final matching value.

It is understood by those skilled in the art that, while the above pre-processing method has been described only by way of example, other existing or future pre-processing methods may be applicable to this invention and should fall within the scope of protection of the present invention.

Preferably, the acquisition unit **101** acquires a first signature corresponding to the first generation device, wherein, the first signature is generated based on the corresponding motion signature information. The acquisition unit **101** may also acquire a second signature corresponding to the second generation device, wherein, the second signature is generated based on the corresponding motion signature information, with the second signature and the first signature corresponding to the same predetermined time threshold.

Specifically, the acquisition unit **101** receives the first signature sent by the first generation device by means of WIFI, Bluetooth, Infrared, Internet etc. For example, a first signature is generated by the first generation device based on its corresponding motion signature information, and then, the acquisition unit **101** receives a second signature sent by the second generation device by means of WIFI, Bluetooth, Infrared, Internet etc. Wherein, the second signature is generated by the second generation device based on its corresponding motion signature information, with the second signature and the first signature corresponding to the same predetermined time threshold. That is, the generation time of the second signature and the first signature corresponding to two different generation devices, the two signatures are generated in the same predetermined period of time.

More preferably, the acquisition unit **101** acquires the second signature in the signature table corresponding to the second generation device based on the first signature, wherein the second signature is generated based on its corresponding motion signature information with the second signature and the first signature corresponding to the same predetermined time threshold.

Specifically, the acquisition unit **101** acquires the corresponding second signature in the signature table based on the first signature acquired, such as its signature generation time information, etc., wherein the second signature and the first signature corresponding to the same predetermined time threshold ensures the two signatures are generated in the same predetermined period of time.

Herein, the signature table stores a predetermined number or time period of signatures, wherein said signatures may have been sent by corresponding generation devices. The signature table can be located in the matching device 1 or a third-party device connected with the matching device 1 via network.

More preferably, the matching device 1 can also create or update the signature table based on the matching result.

Specifically, the matching device 1 creates or updates the signature table based on the matching result, such as storing or deleting signature in the signature table. For example, different devices may have different transmission times. In the event of a match failure, matching device 1 can store the first signature or the second signature in the signature table for future signature matching. If a match succeeds, depending on the application, matching device 1 can delete the stored second signature in the signature table. Alternatively, matching device 1 may keep the signatures for future signature matching, so that signatures received during predetermined time periods may be selected in a subsequent match for best match results. When signatures stored in the signature table exceed the predetermined number, or, the generation time of the signature stored in the signature table is earlier than the predetermined time, matching device 1 can delete signatures that are no longer used in accordance with the first in first out or similar rules.

It is understood by those skilled in the art that, while the above signature table creation or updating method has been described only by way of example, other existing or future signature table creation or updating method may be applicable to this invention and should fall within the scope of protection of the present invention.

Preferably, the acquisition unit **101** acquires multiple candidate signatures corresponding to multiple candidate devices, wherein the multiple candidate signatures are generated based on their corresponding motion signature information. Further, the multiple candidate signatures and the first signature correspond to the same predetermined time threshold, wherein, the matching unit **102** matches the first signature with said multiple candidate signatures respectively based on their motion signature information to acquire the corresponding multiple matching results. The best matching result is determined from the multiple matching results, and the second generation device is determined as one corresponding to the signature from the multiple candidate signatures that yield the best matching result.

Specifically, the acquisition unit **101** receives multiple candidate signatures respectively sent by multiple candidate devices by means of WIFI, Bluetooth, Infrared, Internet etc. Generated based on their corresponding motion signature information, the candidate signatures and the first signature correspond to the same predetermined time threshold. Alternatively, the acquisition unit **101** acquires multiple candidate signatures from the signature table that respectively correspond to multiple candidate devices. Subsequently, the matching unit **102** matches the first signature with multiple candidate signatures respectively to acquire multiple corresponding matching results. Then, it determines the best match from the multiple matching results and determines the corresponding second generation device based on the best corresponding signature match.

Preferably, the acquisition unit **101** acquires a first signature and a second signature that are to be matched, wherein the first signature comprises one or more first sub-signatures that are generated based on the corresponding motion signature information. The matching unit **102** matches at least one of the one or more first sub-signatures with the second signature to acquire corresponding candidate matching results, then determines the matching result corresponding to the first signature and the second signature on the basis of the candidate matching results and predetermined rules.

Specifically, the first signature received by the acquisition unit **101** comprises one or more first sub-signatures, which can be acquired by packet processing the first signature. The packet processing can be performed by the first generation device that generated the first signature or matching device 1.

Subsequently, the matching unit **102** matches at least one of the one or more first sub-signatures with the second signature to acquire corresponding candidate matching results. Herein, the matching processing includes but is not limited to parallel matching processing and serial matching processing. For example, the parallel matching processing simultaneously matches multiple first sub-signatures with the second signature respectively. The serial matching processing matches one first sub-signature with the second signature first, then matches the second first sub-signature with the second signature, and so on. When matching device 1 performs parallel matching processing on the at least one first sub-signature with the second signature, matching device 1 may also send the at least one first sub-signature to other matching devices to allow multiple matching devices perform matching processing simultaneously, thus shortening the matching processing time. When matching device 1 performs serial matching processing on the at least one first sub-signature with the second signature, and the matching device 1 uses logic "AND" mode to combine matching results. If one of the first sub-signature and the second signature fails to match, the matching unit **102** need not perform matching on other first sub-signatures, thus shortening the matching processing time.

Then, the matching unit **102** determines the corresponding matching result of the first signature and the second signature based on the acquired candidate matching results and the predetermined rules. For example, if at least one of the candidate matching results match, then the first signature and the second signature match. Similarly, if a match value in the candidate matching results exceeds a predetermined threshold, then the first signature and the second signature match. Alternatively, if all the candidate matching results match, then the first signature and the second signature match.

It is understood by those skilled in the art that the above predetermined rules has been described only by way of example, other existing or future predetermined rules may be applicable to this invention and should fall within the scope of protection of the present invention.

FIG. 2 illustrates a device diagram of matching motion signature based on motion signature information according to a preferred embodiment of the present invention. The matching device 1 further comprises a packet unit **203**. Referring to FIG. 2 for the details of the preferred embodiment, specifically, the acquisition unit **101** acquires the first signature that is to be matched and at least one second signature, wherein the first signature is generated based on the corresponding motion signature information. The packet unit **203** packets the first signature and the second signature to acquire one or more first sub-signatures and one or more second sub-signatures. The matching unit **202** matches at least one of the one or more first sub-signatures with at least one of the one or more second sub-signatures based on the motion signature information to acquire the corresponding candidate matching results, and then determines the matching results corresponding to the first signature and the second signature based on the candidate matching results and the predetermined rules. Wherein, the acquisition unit **201** is the same or basically the same as the corresponding unit shown in FIG. 1, so it will not be described again while incorporated herein by reference.

The packet unit **203** packets the first signature and the second signature to acquire one or more first sub-signatures and one or more second sub-signatures. Specifically, the packet unit **203** packets the first signature and at least one second signature acquired by acquisition unit **201** based on a predetermined sub-signature length. For example, packet processing may result in one or more first sub-signatures and one or more second sub-signatures, which may be generated via different motion feature or encoding method. Matching of each of the first sub-signatures can be performed separately to acquire candidate matching results respectively. The final matching result is the combination of multiple candidate matching results, each match can be performed in the same or different matching devices. The candidate matching results can be combined via the "AND", "OR" logic to output a final matching result. Combining via "AND" logic determines a match as final match result when all candidate matching results match. Combining via "OR" logic determines a match as final match result when one of the candidate matching results matches.

Herein, if the first signature has multiple encoding modes and the second signature only has one encoding mode, the packet unit **203** can only packet the first signature.

Subsequently, the matching unit **202** matches at least one or more first sub-signatures with at least one of the one or more second sub-signatures based on the motion signature information to acquire the corresponding candidate matching results. It then determines the matching result corresponding to the first signature and the second signature based on the candidate matching results and predetermined rules.

Herein, if the packet unit **203** only packets the first signature, the matching unit **202** may match at least one of the one or more first sub-signatures acquired via the first signature packet processing with the second signature to acquire corresponding candidate matching result. It then determines the matching result corresponding to the first signature and the second signature based on the candidate matching results and predetermined rules.

Preferably, the packet unit **203** packets the first signature and the second signature based on their generation related information to acquire one or more first sub-signatures and one or more the second sub-signatures, wherein the different sub-signatures correspond to different generation related information,

Wherein, the generation related information shall comprise at least one of the following:

- The motion signature information of the motion signature,
- The encoding of the motion signature.

Herein, the simplest packet processing is to divide a signature into several sections, which is divided into several signature sequences, with each sequence then matched individually. Each section can generate encoding based on different motion signature information. For example, one sub-signature is generated based on the motion global features, and another sub-signature is generated based on the motion prominent features. The packet processing can also be generated based on different encodings. For example, one sub-signature is encoded based on the motion signature value, and another sub-signature is encoded based on the change range or two-valued value. Different sub-signature can be matched in serial mode, that is to match one first section (one first sub-signature with one second sub-signature) and then match the next section. When combining results via "AND" logic, matching of remainder sections need not proceed when a first section fails to match. So the sections with short match searching time can be matched first to avoid processing the time consuming sections. This coarse-to-fine matching strategy can improve the matching speed.

Preferably, the predetermined rules shall comprise at least one of the following:

- Determine the matching results on the basis of the weighted sum of all sections candidate matching results.
- Determine the matching results on the basis of the logical combination of all sections candidate matching results.

Herein, the predetermined rules shall comprise the weighted sum of all sections candidate matching results to determine the matching result. For example, when matching the at least one first sub-signature with the at least one second sub-signature and the acquired weighted sum of the matched value in the candidate matching results exceeds the predetermined threshold value, it is determined that the first signature and the second signature match.

The predetermined rules also comprise the logical combination of all sections candidate matching results to determine the matching result. For example, when the predetermined rules comprise the logical "AND" combination based on each section candidate matching results to determine the matching result, the first signature and the second signature match only when all the candidate matching results match. As another example, when the predetermined rules comprise the logical "OR" combination based on each section candidate matching results to determine the matching result, the first signature and the second signature match as long as one of the candidate matching result is match.

Preferably, the packet processed first signature sequence and the second signature sequence can be matched by different matching devices.

Herein, each section matching can be assigned to different matching devices for improved matching speed and efficiency. In some applications, this approach can also achieve the purpose of security. For example, device A sends section 1 to device B for matching the section 1 detected by device B, and device B sends section 2 to device A for matching the section 2 detected by device A. A match occurs only when both sections match. Thus, matching may be divided among two devices, with any device having only one half of the signature and the matching. The device and section combination may be determined by the predetermined rules, such as the device with the smaller serial number assigned section 1, etc.

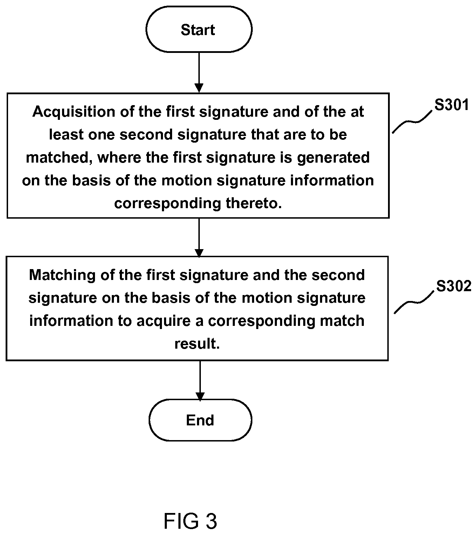

FIG. 3 illustrates a method flow chart of matching signature based on motion signature information according to another aspect of the present invention.

Herein, the matching device 1 includes but is not limited to network device, controlled device, etc. that are to be matched. If the matching device 1 is a network device, then it acquires the first signature sent by the first generation device and the second signature sent by the second generation device then matches them. If the matching device 1 is a controlled device that is to be matched, then it acquires the second signature sent by a remote device etc. and matches the first signature on the basis of the motion signature information of the motion pattern. It is understood by those skilled in the art that, while the above matching device has been described only by way of example, other existing or future matching device may be applicable to this invention and should fall within the scope of protection of the present invention.

In step **S301**, the matching device 1 acquires the first signature and the second signature that are to be matched, where the first signature is generated based on the motion signature information corresponding thereto of the motion pattern. Specifically, in step **S301**, the means by which matching device 1 acquires the first signature includes but is not limited to:

1) acquiring the first signature generated by the motion signature information based on the motion pattern captured by a imaging device by calling the imaging device of matching device 1.
2) receiving the first signature sent by the first generation device via WIFI, Bluetooth, Infrared, Internet etc.

Herein, the first signature is generated based on the motion signature information of the motion pattern by encoding methods such as Fourier shape descriptor method, geometric parameter method, shape invariant moment method, rotation function method, wavelet descriptor method, etc.

In step **S301**, the means by which matching device 1 acquires the second signature includes but is not limited to:

1) receiving the second signature sent by the second generation device via WIFI, Bluetooth, Infrared, Internet etc.
2) selection of the second signature randomly or sequentially in the signature table corresponding to matching device 1 based on the first signature.

Herein, if the signature table holds a predetermined number of signatures or signatures generated within a predetermined time period, said signatures may be referred to as predetermined signatures. Signatures in the table may also have been sent by corresponding remote devices. The signature table can be located in matching device 1 or in a third party device connected with matching device 1 via network.

For example, if the matching device 1 is a network device, a first generation device captures through its imaging device a motion pattern, such motion pattern of a moving second generation device, and generates a first signature based on the motion signature information from the motion pattern. Subsequently, the first generation device sends the first signature to matching device 1. The second generation device generates a corresponding second signature through its MEMS sensor, such as through detection of its motion direction, velocities, accelerations etc., and sends the second signature to matching device 1. In step **S301**, matching device 1 acquires the first signature and the second signature that are to be matched.

As another example, if matching device 1 is a controlled device, etc. that is to be matched, a second generation device generates a corresponding second signature through its MEMS sensor, such as through detection of its motion direction, velocities, accelerations etc., and sends the second signature to the matching device 1. In step **S301**, matching device 1 acquires the second signature, as well as captures through its imaging device a motion pattern of the moving second generation device and generates a first signature based on the motion signature information of the motion pattern. Matching device 1 takes the generated first signature and the received second signature as the first signature and the second signature that are to be matched.

It is understood by those skilled in the art that, while the above acquisition mode of the first signature and the second signature has been described only by way of example, other existing or future acquisition mode of the first signature and the second signature may be applicable to this invention and should fall within the scope of protection of the present invention.

In step **S302**, matching device 1 matches the first signature and the second signature based on their motion signature information to acquire a corresponding match result. Specifically, in step **S302**, matching device 1 matches the first signature and the second signature based on the motion signature information of the first signature such as image feature points, image edge features, image closed contour, motion trajectory information, velocities, accelerations and relative changes in motion directions, etc. to acquire a corresponding match result. For example, when the first signature based on the corresponding motion trend information of the motion pattern is encoded as 1233, in step **S302**, matching device 1 acquires its first signature and selects a predetermined second signature from matching device 1 as 1234. In step **S302**, matching device 1 matches the first signature and the second signature accordingly, and determines that the two signatures do not match. Preferably, matching device 1 can also predetermine a tolerance, so that the two signatures can be determined as a match when they fall within the tolerance. Otherwise, the match has failed. For example, if the predetermined second signature is 1234 and the first signature is 1232, then the match has failed. If the first signature is 1233, then the match has succeeded. It is understood by those skilled in the art that, although the numbers here has been described only by way of example, they should not be considered as any limitation to the present invention.

As another example, when a second signature is generated based on the motion signature information corresponding thereto of the motion pattern, in step **S302**, matching device 1 matches a first signature and the second signature based on the motion signature information of the first signature and the second signature to acquire a corresponding match result.

It is understood by those skilled in the art that, while the above modes of matching the first signature and the second signature has been described only by way of example, other existing or future modes of matching a first signature and a second signature may be applicable to this invention and should fall within the scope of protection of the present invention.

Preferably, step **S302** comprises a sub-step **S302a** (not shown) and a sub-step **S302b** (not shown). In sub-step **S302a**, matching device 1 matches the first signature and the second signature as described based on the motion signature information to acquire a corresponding match. In sub-step **S302b**, matching device 1 determines the match result based on the corresponding match as described and a predetermined match threshold.

Herein, matching device 1 may also predetermine a match threshold, so that when the feature matching (feature similarity) of the first signature and the second signature exceeds the predetermined match threshold, the two signatures are determined as a match.

Specifically, in sub-step **S302a,** matching device 1 matches the first signature and the second signature based on the motion signature information of the first signature and the second signature to acquire a corresponding matching value, such as the feature similarity of the two signatures. In sub-step **S302b,** matching device 1 determines the match result based on the feature matching and the predetermined match threshold. For example, when the feature matching (feature similarity) exceeds the match threshold, the first signature and the second signature are determined as a match. When the feature matching (feature similarity) is less than the match threshold, a match of the first signature with the second signature has failed.

More preferably, matching device 1 can also acquire multiple candidate signatures corresponding to multiple candidate devices, wherein the multiple candidate signatures are based on their corresponding motion signature information of the motion pattern. In sub-step **S302a,** matching device 1 matches the first signature with the multiple candidate signatures, respectively, to acquire multiple candidate signature match values. In sub-step **S302b,** matching device 1 selects the largest signature match value from the candidate signature match values and takes its corresponding candidate signature as the second signature, which is then used to determine the corresponding second generation device. Alternatively, in sub-step **S302b,** matching device 1 filters the multiple match values for those that exceed a predetermined matching threshold. Matching device 1 further selects the largest match value amongst the filtered match values and takes its corresponding candidate signature as the second signature. It then determines the candidate device corresponding to the second signature as the second generation device.

The motion signature information of the signature includes but is not limited to motion trajectory feature information, motion trend feature information, etc. In a preferred embodiment, motion signature information comprises motion trajectory feature information, wherein, signature matching as described herein shall be based on at least one of the following:

- image feature of the motion trajectory,
- image edge feature of the motion trajectory,
- image closed contour of the motion trajectory.

Specifically, when motion signature information comprises motion trajectory feature information, in step **S302,** matching device 1 matches the first signature and the second signature based on image feature, image line segment feature and image closed contour, etc. that comprise motion trajectory information. For example, regarding motion signature information based on motion pattern such as motion trajectory feature information, with the first signature encoded, in step **S302,** matching device 1 calculates the feature matching (feature similarity) of the first signature and the second signature by a matching method based on image shape feature. Herein, encoding methods include but are not limited to Fourier shape descriptor method, geometric parameter method, shape invariant moment method, rotation function method, wavelet descriptor method, etc. Herein, image shape feature matching methods include matching based on image feature, image line segment feature, image closed contour and other advanced feature matching, etc. Wherein, image feature matching methods include minimum mean square error matching, fast matching, Haussdorff point distance matching, etc. Matching methods based on image line segment features include HYPER matching, Chafer matching etc. Matching methods based on image closed contour features include Fourier shape descriptor and HRP descriptor. Matching methods based on other advanced features include relaxation method, energy minimizer, etc.

It is understood by those skilled in the art that, while the above matching methods have been described only by way of example, other existing or future matching methods may be applicable to this invention and should fall within the scope of protection of the present invention.

In another preferred embodiment, motion signature information comprises motion trend feature information, wherein, the matching as described shall be based on at least one of the following:

- matching the first signature and the second signature directly,
- detecting and matching the second signature based on the first signature.

For example, a generation device, such as the first generation device and the second generation device, etc., encodes using the motion trend feature information such as the corresponding motion velocities and motion directions relative changes, etc. In step **S302,** matching device 1 can match the first signature and the second signature directly, for example, when the encoding lengths of the first signature and the second signature that are to be matched are the same or similar. When matching directly can be performed, two signatures match if their encoding are identical. The two signatures do not match if their encoding are different. Alternatively, in step **S302,** matching device 1 can match within a certain fault tolerance. The two signatures match if the feature matching (feature similarity) exceeds a predetermined match threshold. A feature matching (feature similarity) lower than the predetermined match threshold indicates that a match has failed.

As another example, in step **S302,** matching device 1 detects and matches the second signature based on the first signature, when the encoding lengths of the first signature and the second signature that are to be matched are quite different. Detecting and matching can be performed, such as via before-after translation of the shorter signature in a certain location to acquire the best match as the match result of the two. Herein, string matching can be performed for detecting and matching, which includes but is not limited to BF Algorithm, KMP Algorithm, BM Algorithm, Sunday Algorithm, or other dynamic programming algorithm (e.g., Dynamic Time Wrapping), etc.

Herein, the generation device can eliminate the encoding influence caused by different devices detection through encoding the speed, direction relative trend or a combination of the two, such as using up (+1), even (0), down (-1), etc. to describe the motion trend information, etc.

Preferably, in step **S301**, matching device 1 acquires the first signature that is to be matched, wherein the first signature is generated based on the motion signature information of the corresponding motion pattern. Based on the auxiliary feature information of the first signature, matching device 1 then acquires the second signature that is to be matched with the first signature, wherein the auxiliary feature information of the second signature corresponds to the second signature. Wherein, the auxiliary feature information as described shall comprise at least one of the following:

- generation time information of the signature,
- generation location information of the signature,
- generation device information corresponding to the signature.

Specifically, in step **S301**, matching device 1 generates a first signature that is to be matched based on the motion pattern captured by its imaging device and the motion feature information of the motion pattern. Alternatively, matching device 1 receives the first signature that is to be matched sent by a first generation device, wherein the first signature is one based on the motion feature information of the corresponding motion pattern. Then, in step **S301,** matching device 1 acquires a second signature that is to be matched with the first signature based on the auxiliary feature information of the first signature, such as signature generation time information, signature generation location information, corresponding generation device (the matching device 1 or the first generation device) information of the first signature. For example, matching device 1 may acquire a second signature having generation time and location that are close to those of the first signature, or acquires the second signature corresponding to a generation device that has a connection record with matching device 1, etc.

Herein, the generation location information of the signature may be acquired by means of the device's GPS, WIFI, communication base, etc. Matching device 1 can only match results within a certain time and location range. Two signatures will not match if this condition is not satisfied. When matching device 1 receives multiple signatures, the matching can be promptly limited to the ones within the same time and location range to accelerate matching and searching as well as to reduce mismatch.

Herein, information related to a generation device that corresponds to a signature includes but is not limited to said device's IP address, ID, connection record, connection frequency, etc.

Similar to the service time and location information, matching device 1 can match device(s) close to the network location first. The locations close to the network comprise terminals in the same subnet, gateway or router. For example, a device with IP 124.10.2.01 is likely connected to the device with IP 124.10.2.02. The matching device 1 matches the device(s) close to the network location first. Alternatively, when there are multiple match candidates, device(s) close to the network location may be assigned matching priority. Thus, devices close to the network location connects faster and easier.

A device ID is a unique device code, such as MAC address, CPU serial number, etc. that can be used to uniquely identify a device. With a device ID, matching device 1 can uniquely identify a possible connection device. Thus, the matching device 1 can record the permission setting between device connections, such as the device ID or a device type that is permitted or not permitted to connect. The setting can be set by a user or set by default based on the device type. Matching device 1 can also record the connected device ID and save them. When a device sends motion signature that is to be matched, matching device 1 can detect all devices capable or incapable of connection with itself, then only searches and matches the signatures from the device capable of connection or eliminates the signatures from the device incapable of connection. If there are multiple candidate match signatures, the system shall prioritize the match to the frequently connected devices. For example, a device that has in the past (or recently) connected can be used for first selecting the device signature for matching. Fast connection can be established if they match and no further search is necessary. Further, matching device 1 can record the connection frequency (or number of times) between devices, which can be used for selecting signatures for priority matching, so that signatures of the devices with connection frequency higher than the threshold are matched first. The above information can also be used to perform weighted calculations in feature matching, such as:

$$\textit{Final feature matching} = w1*\textit{initial feature matching} + w2* \textit{connection frequency}$$

Herein, *initial feature matching* is the feature matching between the first signature and the second signature acquired as part of the matching in matching device 1, in step **S302**. The *final feature matching* is the feature matching acquired by final calculation, the *connection frequency* is the frequency at which the first signature and the second signature corresponding devices connect, and *w1* and *w2* are weightings.

It is understood by those skilled in the art that, while the above auxiliary feature information has been described only by way of example, other existing or future auxiliary feature information may be applicable to this invention and should fall within the scope of protection of the present invention.

Preferably, the method also comprises step S304 (not shown). In step **S304**, matching device 1 pre-processes a first signature and a second signature to acquire a pre-processed first signature and a pre-processed second signature. In step **S302**, matching device 1 matches the pre-processed first signature and the pre-processed second signature based on motion feature information to acquire the corresponding matching result, wherein, the pre-processing shall comprise at least one of the following:

- mapping,
- decoding,
- encoding.

Specifically, in step **S304**, matching device 1 performs pre-processing such as mapping, decoding, encoding, etc. on the first signature and the second signature to acquire a pre-processed first signature and a pre-processed second signature. For example, in step **S304**, matching device 1 maps a three-dimensional signature to a two-dimensional signature, decoding one of the encoded signature to match with another un-encoded signature, or encoding one of the un-encoded signature to match with another encoded signature. As another example, when the first signature and the second signature are differently encoded, in step **S304**, matching device 1 can decode one of the signatures and re-encode the signature with the encoding method of the other signature. Then, the two signature are encoded with the same method which simplifies the matching that follows.

Subsequently, in step **S302,** matching device 1 matches the pre-processed first signature and the pre-processed second signature based on motion feature information to acquire a corresponding matching result.

Herein, at least the first signature is generated based on the motion signature information of the corresponding motion pattern, such as via motion captured by a two-dimensional or three-dimensional imaging device, while the second signature can be generated by using MEMS, etc. sensors that detect motion in three-dimensional space. Since different devices have different motion detection mode and angle, they generate different signatures as well. Using global features, prominent features, relative size, and affine invariant features has certain advantages, such that no significant change in signature hardware and capture angle would result. For example, the sloshing frequency of global features, the folding point time of prominent features, location, etc. would not be changed significantly as a result. Also, relative size (up, even, down) can better tolerate the error and noise interference caused by precision in detection.

For example, in step **S304**, matching device 1 projects the motion or signature from the three-dimensional space onto two-dimensional space and re-generates signature (especially pattern or perpendicular director or direction towards the equipment). The signature generated three-dimensional motion captured by MEMS and the signatures generated by the different imaging devices are different on the reflection/projection plane. Imaging devices at different angles have different two-dimensional image plane with specific projection relationship. As long as it has a relative angle, the conversion can be acquired by simple geometrical relationship.

For signatures recording two- (three-) dimensional trajectory and corresponding timing values at various positions, they may be mapped from three-dimensional plane to two-dimensional plane or mapped between different two-dimensional planes. The imaging device's direction may be easily obtained if the imaging device has Compass, etc. type of orientation sensor. The positional relation of the three-dimensional and two-dimensional image planes may be determined. Likewise, the relative direction of any two imaging devices can be easily acquired. If there is no direction sensor, the traditional image calibration method can also detect the relative direction between different imaging device planes (relative calibration) or the absolute position relation of any imaging device relative to the earth (absolute calibration).

Once the signatures from different planes are converted into the same plane, their matching effect of the same motion can be more stable. If the plane relationship of two signatures is unknown, the search maximum matching method can be used. When the two signatures generated by the same motion are mapped onto the same plane, they have the maximum matching similarity. Thus, in step **S304**, matching device 1 can map one of the signatures at a certain angle and distance (amplification factor) in a certain change range and interval step-by-step (such as clockwise and counterclockwise rotate within 45 degrees by every 5 degrees). For every mapping of a signature, it is matched with another signature once and their similarity for each mapping is recorded. Ultimately, the maximum similarity value is taken as the final matching value.

It is understood by those skilled in the art that, while the above pre-processing method has been described only by way of example, other existing or future pre-processing methods may be applicable to this invention and should fall within the scope of protection of the present invention.

Preferably, step **S301** comprises a sub-step **S301a** (not shown) and a sub-step **S301b** (not shown). In sub-step **S301a**, matching device 1 acquires the first signature corresponding to the first generation device, wherein, the first signature is generated based on the motion signature information of the corresponding motion pattern. In sub-step **S301b**, matching device 1 may also acquire a second signature corresponding to the second generation device, wherein, the second signature is generated based on the motion signature information of the corresponding motion pattern, with the second signature and the first signature corresponding to the same predetermined time threshold.

Specifically, in sub-step **S301a**, matching device 1 receives the first signature sent by the first generation device by means of WIFI, Bluetooth, Infrared, Internet etc. For example, a first signature is generated by the first generation device based on the motion signature information of the corresponding motion pattern. In sub-step **S301b**, matching device 1 receives a second signature sent by the second generation device by means of WIFI, Bluetooth, Infrared, Internet etc. Wherein, the second signature is generated by the second generation device based on the motion signature information of the corresponding motion pattern, with the second signature and the first signature corresponding to the same predetermined time threshold. That is, the generation time of the second signature and the first signature corresponding to two different generation devices, the two signatures are generated in the same predetermined period of time.

More preferably, in sub-step **S301b**, matching device 1 acquires the second signature in the signature table corresponding to the second generation device based on the first signature, wherein the second signature is generated based on the motion signature information of the corresponding motion pattern, with second signature and the first signature corresponding to the same predetermined time threshold.

Specifically, in sub-step **S301b**, matching device 1 acquires the corresponding second signature in the signature table based on the first signature acquired in sub-step **S301a**, such as the first signature generation time information etc., wherein the second signature and the first signature corresponding to the same predetermined time threshold ensures the two signatures are generated in the same predetermined period of time.

Herein, the signature table stores a predetermined number or time period of signatures, wherein said signatures may have been sent by corresponding generation devices. The signature table can be located in matching device 1 or a third-party device connected with matching device 1 via network.

More preferably, the method also comprises step **S305** (not shown). In step **S305**, matching device 1 can create or update the signature table based on the matching result.

Specifically, in step **S305**, matching device 1 creates or updates the signature table based on the matching result, such as storing or deleting signature in the signature table. For example, different devices may have different transmission times. In the event of a match failure, in step **S305**, matching device 1 can store the first signature or the second signature in the signature table for future signature matching. If a match succeeds, depending on the application, in step **S305**, matching device 1 can delete the stored second signature in the signature table. Alternatively, matching device 1 may keep the signatures for future signature matching, so that signatures received during predetermined time periods may be selected in a subsequent match for best match results. When signatures stored in the signature table exceed the predetermined number, or, the generation time of the signature stored in the signature table is earlier than the predetermined time, in step **S305**, matching device 1 can delete signatures that are no longer used in accordance with the first in first out or similar rules.

It is understood by those skilled in the art that, while the above signature table creation or updating method has been described only by way of example, other existing or future signature table creation or updating methods may be applicable to this invention and should fall within the scope of protection of the present invention.

Preferably, in sub-step **S301b,** matching device 1 acquires multiple candidate signatures corresponding to multiple candidate devices, wherein the multiple candidate signatures are generated based on the motion signature information of their corresponding motion pattern. Further, the multiple candidate signatures and the first signature correspond to the same predetermined time threshold, wherein, in step **S302,** matching device 1 matches the first signature with said multiple candidate signatures respectively based on their motion signature information to acquire the corresponding multiple matching results. The method also comprises step **S306** (not shown). In step **S306**, matching device 1 determines the best matching result from the multiple matching results, and the second generation device is determined as the one corresponding to the signature from the multiple candidate signatures that yield the best matching result.

Specifically, in sub-step **S301b,** matching device 1 receives multiple candidate signatures respectively sent by multiple candidate devices by means of WIFI, Bluetooth, Infrared, Internet, etc. Generated based on their motion signature information of the corresponding motion pattern, the candidate signatures and the first signature correspond to the same predetermined time threshold. Alternatively, in sub-step **S301b,** matching device 1 acquires multiple candidate signatures from the signature table that respectively correspond to multiple candidate devices. Subsequently, in step **S302**, matching device 1 matches the first signature with multiple candidate signatures respectively to acquire multiple corresponding matching results. Then, in step **S306**, matching device 1 determines the best match from the multiple matching results and determines the corresponding second generation device based on the best corresponding signature match.

Preferably, in step **S301**, matching device 1 acquires a first signature and a second signature that are to be matched, wherein the first signature comprises one or more first signature sequences that are generated based on the motion signature information of the corresponding motion pattern. In step **S302**, matching device 1 matches at least one of the one or more first signature sequences with the second signature to acquire corresponding candidate matching results, then determines the matching result corresponding to the first signature and the second signature based on the candidate matching results and predetermined rules.

Specifically, in step **S301**, the first signature received by matching device 1 comprises one or more first signature sequences, which can be acquired by packet processing the first signature. The packet processing can be performed by the first generation device that generated the first signature or matching device 1.

Subsequently, in step **S302**, matching device 1 matches at least one of the one or more first signature sequences with the second signature to acquire corresponding candidate matching results. Herein, the matching processing includes but is not limited to parallel matching processing and serial matching processing. For example, the parallel matching processing simultaneously matches multiple first signature sequences with the second signature respectively. The serial matching processing matches one first signature sequence with the second signature first, then matches the second first signature sequence with the second signature, and so on. When matching device 1 performs parallel matching processing on the at least one first signature sequence with the second signature, matching device 1 may also send the at least one first signature sequence to other matching devices to allow multiple matching devices perform matching processing simultaneously, thus shortening the matching processing time. When matching device 1 performs serial matching processing on the at least one first signature sequence with the second signature, and matching device 1 uses logic "AND" mode to combine matching results. If one of the first signature sequences and the second signature fails to match, in step **S302,** matching device 1 need not perform matching processing on other first signature sequences, thus shortening the matching processing time.

Then, in step **S302,** matching device 1 determines the corresponding matching result of the first signature and the second signature based on the acquired candidate matching results and the predetermined rules. For example, if at least one of the candidate matching results match, then the first signature and the second signature match. Similarly, if a match value in the candidate matching results exceeds a predetermined threshold, then the first signature and the second signature match. Alternatively, if all the candidate matching results match, then the first signature and the second signature match.

It is understood by those skilled in the art that, while the above predetermined rules have been described only by way of example, other existing or future predetermined rules may be applicable to this invention and should fall within the scope of protection of the present invention.

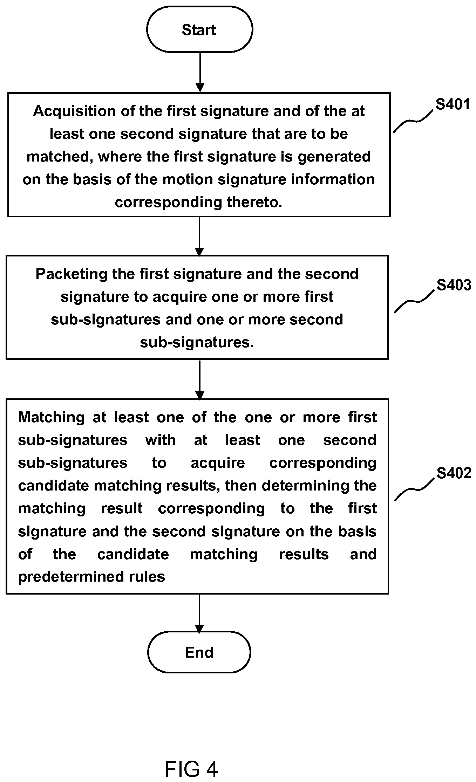

FIG. 4 illustrates a method flow chart of matching motion signature based motion signature information according to another preferred embodiment of the present invention. The method also comprises step **S403**. Referring to FIG 4 for the details of the preferred embodiment, specifically, in step **S401**, matching device 1 acquires the first signature that is to be matched and at least one second signature, wherein the first signature is generated based on the motion signature information of the corresponding motion pattern. In step **S403**, matching device 1 packets the first signature to acquire one or more first signature sequences. In step **S402,** matching device 1 matches at least one of the one or more first signature sequences with the second signature based on the motion signature information to acquire the corresponding candidate matching results, and then determines the matching results corresponding to the first signature and the second signature based on the candidate matching results and the predetermined rules. Wherein, the step **S301** is the same or basically the same as the corresponding step shown in FIG. 1, so it will not be described again while incorporated herein by reference.

In step **S403,** matching device 1 packets the first signature to acquire one or more first signature sequences. Specifically, in step **S403,** matching device 1 packets the first signature acquired in step **S401** based on a predetermined sequence length. For example, packet processing may result in one or more first signature sequences, which may be generated via different motion feature or encoding methods. Matching of each of the first signature sequence can be performed separately to acquire candidate matching results respectively. The final matching result is the combination of multiple candidate matching results, each match can be performed in the same or different matching devices. The candidate matching results can be combined via the "AND", "OR" logic to output a final matching result. Combining via "AND" logic determines a match as final match result when all candidate matching results match. Combining via "OR" logic determines a match as final match result when one of the candidate matching results matches.

Subsequently, in step **S402,** matching device 1 matches at least one of the one or more first signature sequences with the second signatures based on motion signature information to acquire at least one corresponding candidate matching result. It then determines the matching result corresponding to the first signature and the second signature based on the at least one candidate matching result and predetermined rules.

Preferably, in step **S403**, matching device 1 can also packet the second signature to acquire one or more second signature sequences. In step **S402**, matching device 1 may match at least one of the one or more first signature sequences with at least one of the one or more second signature sequences to acquire corresponding candidate matching result(s). It then determines the matching result corresponding to the first signature and the second signature based on the candidate matching results and predetermined rules.

Herein, the simplest packet processing is to divide a signature into several sections, which is divided into several signature sequences, with each sequence then matched individually. Each section can generate encoding based on different motion signature. For example, one signature sequence is generated based on the motion global features, and another signature sequence is generated based on motion prominent features. The packet processing can also be generated based on different encodings. For example, one signature sequence is encoded based on the motion signature value, and another signature sequence is encoded based on the change range or two-valued value. Different signature sequence can be matched in serial mode, that is to match one first section (one first signature sequence with one second signature sequence) and then match the next section. When combining results via "AND" logic, matching of remainder sections need not proceed when a first section fails to match. So the sections with short match searching time can be matched first to avoid processing the time consuming sections. This coarse-to-fine matching strategy can improve the matching speed.

In addition, each section matching can be assigned to different matching devices for improved matching speed and efficiency. In some applications, this approach can also achieve the purpose of security. For example, device A sends section 1 to device B for matching the section 1 detected by device B, and device B sends section 2 to device A for matching the section 2 detected by device. A match occurs only when both sections match. Thus, matching may be divided among two devices, with any device having only one half of the signature and the matching. The device and section combination may be determined by the predetermined rules, such as the device with the smaller serial number assigned section 1, etc.

A software program of the present invention can be implemented by a processor to perform the steps or functions described herein above. Similarly, the software program of the present invention (including associated data structures) can be stored in a computer-readable recording media, for example, RAM memory, magneto-optical drive or floppy disk and similar devices. In addition, some steps or functions of the present invention may be implemented in hardware, such as implementation all steps or functions of the circuit by way of cooperating the processor.

In addition, part of the present invention may be applied as a computer program product, such as computer program instruction which can call or provide methods and/or technical solutions according to the invention by operating the computer when executed by a computer. The program instructions of the present invention calling method may be stored in fixed or removable recording media, and/or are transmitted in the data flow by radio or other signal bearing media, and/or stored in the working storage of the running computer equipment in accordance with the program instructions. Herein, one embodiment of the present invention comprises an unit that can be used as a memory for storing computer program instructions and a processor for executing program instructions, wherein, when the computer program instructions being executed by the processor, trigger the device running according to the mentioned embodiments methods and/or technology programs of the present invention.

The embodiments should be considered as exemplary and non-limiting, the scope of the present invention is defined by the attached claims. In addition, apparently the word "comprise" does not exclude other units or steps, the singular does not exclude the plurality. In the device claims, more units or devices can be realized through one unit or device by means of software or hardware. The words like "first", "second" etc. are used to express names but not any particular sequences.

**Claims**

1. A system for matching motion signatures generated by two devices separated from one another comprising:

   a first device for moving along a trajectory, the first device including a MEMS sensor capable of generating a first signal representative of the speed and direction of movement of the first device to define MEMS data, a processor and a memory for storing computer readable instructions that when executed by the processor encodes the first signal into a first motion signature according to a first encoding technique, the first device configured to electronically transmit to a second device the first motion signature and receive a second motion signature from the second device;
   the second device including an image device for capturing a motion image of the first device during its movement along the trajectory, a processor and a memory for storing computer readable instructions that when executed by the processor generates a second signal representative of the motion image and encodes the second signal into the second motion signature according to a second encoding technique, the second device configured to electronically transmit to the first device the second motion signature and receive the first motion signature from the first device; and
   a matching unit on the first device or the second device and having a processor and a memory for storing computer readable instructions that when executed by the processor determines a match by comparing the first motion signature and the second motion signature based on one or more motion signature information comprising motion trajectory information and/or motion trend information.

2. The system of claim 1 wherein when the motion signature information comprises motion trajectory information, the first and/or second encoding techniques include the use of a Fourier shape descriptor method, a geometric parameter method, a shape invariant moment method, a rotation function method, and/or a wavelet descriptor method.

3. The system of claim 2 wherein the comparison of the first motion signature with the second motion signature based on image features include the use of one or more technique(s) selected from the group consisting of: minimum mean square error matching, fast matching and Haussdorff point distance matching.

4. The system of claim 2 wherein the comparison of the first motion signature with the second motion signature based on image line segment features include the use of one or more technique(s) selected from the group consisting of: HYPER matching and Chafer matching.

5. The system of claim 2 wherein the comparison of the first motion signature with the second motion signature based on image closed contour features include the use of one or more technique(s) selected from the group consisting of: Fourier shape descriptor, HRP descriptor, relaxation method, and energy minimizer.

6. The system of claim 1 further comprising an orientation sensor on the second device.

7. The system of claim 1 wherein the image device is a two-dimensional image device or a three-dimensional image device.

8. The system of claim 1 wherein the matching unit further maps three-dimensional trajectory information onto a two-dimensional plane.

9. The system of claim 1 wherein the first device and the second device are each configured to record auxiliary information of the trajectory and transmit it to the other device, and the matching unit is configured to further compare the auxiliary information to determine a pre-match result.

10. The system of claim 9 wherein the auxiliary information includes information pertaining to at least one of: signature generation time, signature generation location and signature generation device.

11. The system of claim 10 wherein the location information is acquired via GPS, WIFI, or communication with a base station.

12. The system of claim 1 wherein the first device and the second device each has a unique device code that is transmitted to the matching unit of the other device, and the matching unit is configured to save the unique device code in its memory to affect each device's connection settings and matching preferences.

13. The system of claim 1 wherein the MEMS sensor is configured to record trajectory data in a first plane, the image device captures trajectory data in a second plane, and the matching unit is configured to project the trajectory in the first plane and the trajectory in the second plane onto a common plane before comparing the first signature and the second signature.

14. The system of claim 13 wherein the common plane is oriented relative to the earth.

15. The system of claim 1 further comprising a packet unit on the first device and the second device, the packet unit configured to packet the first signature and the second signature individually into one or more sub-signature(s), wherein each device is further configured to transmit its sub-signature(s) to the other device, and further wherein the matching unit is configured to match at least one of the one or more sub-signature(s) of the first signature with corresponding sub-signature(s) of the second signature to determine candidate(s) for the match.

16. The system of claim 15 wherein each device is further configured to transmit a mutually exclusive subset of its sub-signatures to the other device, and further wherein the matching unit on each device is configured to match the sub-signatures of the first signature with corresponding sub-signatures of the second signature.


**Patentansprüche**

1. System zum Anpassen von Bewegungssignaturen, die durch zwei voneinander getrennte Vorrichtungen erzeugt werden, umfassend:

eine erste Vorrichtung zum Bewegen entlang einer Bahn, wobei die erste Vorrichtung einen MEMS-Sensor, der in der Lage ist, ein erstes Signal zu erzeugen, das für die Geschwindigkeit und Bewegungsrichtung der ersten Vorrichtung kennzeichnend ist, um MEMS-Daten zu definieren, einen Prozessor und einen Speicher zum Speichern von computerlesbaren Anweisungen, die, wenn sie durch den Prozessor ausgeführt werden, das erste Signal gemäß einer ersten Codierungstechnik in eine erste Bewegungssignatur codieren, einschließt, wobei die erste Vorrichtung konfiguriert ist, die erste Bewegungssignatur an eine zweite Vorrichtung elektronisch zu übertragen und eine zweite Bewegungssignatur von der zweiten Vorrichtung zu empfangen;
die zweite Vorrichtung, die eine Bildvorrichtung zum Erfassen eines Bewegungsbildes der ersten Vorrichtung während ihrer Bewegung entlang der Bahn, einen Prozessor und einen Speicher zum Speichern von computerlesbaren Anweisungen, die, wenn sie durch den Prozessor ausgeführt werden, ein zweites Signal erzeugen, das für das Bewegungsbild kennzeichnend ist und das zweite Signal in die zweite Bewegungssignatur gemäß einer zweiten Codierungstechnik codieren, einschließt, wobei die zweite Vorrichtung konfiguriert ist, die zweite Bewegungssignatur an die erste Vorrichtung elektronisch zu übertragen und die erste Bewegungssignatur von der ersten Vorrichtung zu empfangen; und

eine Anpassungseinheit auf der ersten Vorrichtung oder der zweiten Vorrichtung und die einen Prozessor und einen Speicher zum Speichern von computerlesbaren Anweisungen, die, wenn sie durch den Prozessor ausgeführt werden, eine Anpassung durch Vergleichen der ersten Bewegungssignatur und der zweiten Bewegungssignatur basierend auf einer oder mehreren Bewegungssignaturinformationen, die Bewegungsbahninformationen und/oder Bewegungstrendinformationen umfassen, aufweist.

2. System nach Anspruch 1, wobei, wenn die Bewegungssignaturinformationen Bewegungsbahninformationen umfassen, die erste und/oder die zweite Codierungstechnik die Verwendung eines Fourier-Formdeskriptorverfahrens, eines geometrischen Parameterverfahrens, eines forminvarianten Momentverfahrens, eines Rotationsfunktionsverfahrens und/oder eines Wavelet-Deskriptorverfahrens einschließt.

3. System nach Anspruch 2, wobei der Vergleich der ersten Bewegungssignatur mit der zweiten Bewegungssignatur basierend auf Bildmerkmalen die Verwendung einer oder mehrerer Techniken einschließt, die aus der Gruppe ausgewählt sind, die aus Folgendem besteht:
Anpassen des Minimums der mittleren quadratischen Abweichung, schnelles Anpassen und Anpassen des Haussdorff-Punktabstands.

4. System nach Anspruch 2, wobei der Vergleich der ersten Bewegungssignatur mit der zweiten Bewegungssignatur basierend auf Bildliniensegmentmerkmalen die Verwendung einer oder mehrerer Techniken einschließt, die aus der Gruppe ausgewählt sind, die aus Folgendem besteht:
HYPER-Anpassen und Chafer-Anpassen.

5. System nach Anspruch 2, wobei der Vergleich der ersten Bewegungssignatur mit der zweiten Bewegungssignatur basierend auf geschlossenen Bildkonturmerkmalen die Verwendung einer oder mehrerer Techniken einschließt, die aus der Gruppe ausgewählt sind, die aus Folgendem besteht:
Fourier-Formdeskriptor, HRP-Deskriptor, Relaxationsverfahren und Energieminimieren.

6. System nach Anspruch 1, ferner umfassend einen Ausrichtungssensor an der zweiten Vorrichtung.

7. System nach Anspruch 1, wobei die Bildvorrichtung eine zweidimensionale Bildvorrichtung oder eine dreidimensionale Bildvorrichtung ist.

8. System nach Anspruch 1, wobei die Anpassungseinheit ferner dreidimensionale Bahninformationen auf eine zweidimensionale Ebene abbildet.

9. System nach Anspruch 1, wobei die erste Vorrichtung und die zweite Vorrichtung jeweils konfiguriert sind, um Hilfsinformationen der Bahn aufzuzeichnen und an die andere Vorrichtung zu übertragen, und die Anpassungseinheit konfiguriert ist, die Hilfsinformationen ferner zu vergleichen, um ein Ergebnis vor der Anpassung zu bestimmen.

10. System nach Anspruch 9, wobei die Hilfsinformationen Informationen einschließen, die Folgendes betreffen:
eine Signaturerzeugungszeit, einen Signaturerzeugungsort und/oder eine Signaturerzeugungsvorrichtung.

11. System nach Anspruch 10, wobei die Standortinformationen über GPS, WLAN, oder Kommunikation mit einer Basisstation erlangt werden.

12. System nach Anspruch 1, wobei die erste Vorrichtung und die zweite Vorrichtung jeweils einen eindeutigen Vorrichtungscode aufweisen, der an die Anpassungseinheit der anderen Vorrichtung übertragen wird, und die Anpassungseinheit konfiguriert ist, den eindeutigen Vorrichtungscode in ihrem Speicher zu speichern, um Verbindungseinstellungen und Anpassungspräferenzen jeder Vorrichtung zu beeinflussen.

13. System nach Anspruch 1, wobei der MEMS-Sensor konfiguriert ist, Bahndaten in einer ersten Ebene aufzuzeichnen, wobei die Bildvorrichtung Bahndaten in einer zweiten Ebene erfasst und die Anpassungseinheit konfiguriert ist, die Bahn in der ersten Ebene und die Bahn in der zweiten Ebene vor dem Vergleichen der ersten Signatur und der zweiten Signatur auf eine gemeinsame Ebene zu projizieren.

**14.** System nach Anspruch 13, wobei die gemeinsame Ebene relativ zu der Erde ausgerichtet ist.

**15.** System nach Anspruch 1, ferner umfassend eine Paketeinheit auf der ersten Vorrichtung und der zweiten Vorrichtung, wobei die Paketeinheit konfiguriert ist, die erste Signatur und die zweite Signatur einzeln in eine oder mehrere Untersignaturen zu packen, wobei jede Vorrichtung ferner konfiguriert ist, ihre Untersignatur(en) an die andere Vorrichtung zu übertragen, und ferner, wobei die Anpassungseinheit konfiguriert ist, wenigstens eine der einen oder der mehreren Untersignatur(en) der ersten Signatur mit der/den entsprechenden Untersignatur(en) der zweiten Signatur anzupassen, um (einen) Kandidat(en) für die Anpassung zu bestimmen.

**16.** System nach Anspruch 15, wobei jede Vorrichtung ferner konfiguriert ist, eine sich gegenseitig ausschließende Untermenge ihrer Untersignaturen an die andere Vorrichtung zu übertragen, und ferner, wobei die Anpassungseinheit an jeder Vorrichtung konfiguriert ist, die Untersignaturen der ersten Signatur mit entsprechenden Untersignaturen der zweiten Signatur anzupassen.

**Revendications**

**1.** Système de mise en correspondance de signatures de mouvement générées par deux dispositifs séparés l'un de l'autre, comprenant :

un premier dispositif destiné à se déplacer le long d'une trajectoire, le premier dispositif comportant un capteur MEMS capable de générer un premier signal représentatif de la vitesse et de la direction de déplacement du premier dispositif pour définir des données MEMS, un processeur et une mémoire destinée à stocker des instructions lisibles par ordinateur qui, lorsqu'elles sont exécutées par le processeur, codent le premier signal en une première signature de mouvement selon une première technique de codage, le premier dispositif étant configuré pour transmettre électroniquement à un second dispositif la première signature de mouvement et recevoir une seconde signature de mouvement en provenance du second dispositif ;
le second dispositif comportant un dispositif d'image destiné à capturer une image de mouvement du premier dispositif pendant son mouvement le long de la trajectoire, un processeur et une mémoire destinée à stocker des instructions lisibles par ordinateur qui, lorsqu'elles sont exécutées par le processeur, génèrent un second signal représentatif de l'image de mouvement et codent le second signal dans la seconde signature de mouvement selon une seconde technique de codage, le second dispositif étant configuré pour transmettre électroniquement au premier dispositif la seconde signature de mouvement et recevoir la première signature de mouvement en provenance du premier dispositif ; et
une unité de mise en correspondance sur le premier dispositif ou le second dispositif et ayant un processeur et une mémoire destinée à stocker des instructions lisibles par ordinateur qui, lorsqu'elles sont exécutées par le processeur, déterminent une correspondance en comparant la première signature de mouvement et la seconde signature de mouvement en fonction d'une ou plusieurs informations de signature de mouvement, dont des informations de trajectoire de mouvement et/ou des informations de tendance de mouvement.

**2.** Système selon la revendication 1, dans lequel lorsque les informations de signature de mouvement comprennent des informations de trajectoire de mouvement, les première et/ou seconde techniques de codage comportent l'utilisation d'un procédé à descripteur de forme de Fourier, d'un procédé à paramètre géométrique, d'un procédé à moment invariant de forme, d'un procédé à fonction de rotation, et/ou d'un procédé à descripteur d'ondelettes.

**3.** Système selon la revendication 2, dans lequel la comparaison de la première signature de mouvement avec la seconde signature de mouvement en fonction des caractéristiques d'image comporte l'utilisation d'une ou plusieurs techniques sélectionnées dans le groupe constitué de :
mise en correspondance par erreur quadratique moyenne minimale, mise en correspondance rapide et mise en correspondance par distance entre des points de Hausdorff.

**4.** Système selon la revendication 2, dans lequel la comparaison de la première signature de mouvement avec la seconde signature de mouvement en fonction de caractéristiques de segment de ligne d'image comporte l'utilisation d'une ou plusieurs techniques sélectionnées dans le groupe constitué de : mise en correspondance HYPER et mise en correspondance de Chafer.

**5.** Système selon la revendication 2, dans lequel la comparaison de la première signature de mouvement avec la seconde signature de mouvement en fonction de caractéristiques de contour fermé d'image comporte l'utilisation d'une ou plusieurs techniques sélectionnées dans le groupe constitué de : descripteur de forme de Fourier, descripteur HRP, procédé de relaxation et minimiseur d'énergie.

6. Système selon la revendication 1, comprenant en outre un capteur d'orientation sur le second dispositif.

7. Système selon la revendication 1, dans lequel le dispositif d'image est un dispositif d'image bidimensionnelle ou un dispositif d'image tridimensionnelle.

8. Système selon la revendication 1, dans lequel l'unité de mise en correspondance mappe en outre des informations de trajectoire tridimensionnelle sur un plan bidimensionnel.

9. Système selon la revendication 1, dans lequel le premier dispositif et le second dispositif sont chacun configurés pour enregistrer des informations auxiliaires de la trajectoire et les transmettre à l'autre dispositif, et l'unité de mise en correspondance est configurée pour comparer davantage les informations auxiliaires pour déterminer un résultat de pré-correspondance.

10. Système selon la revendication 9, dans lequel les informations auxiliaires comportent des informations se rapportant à : une heure de génération de la signature et/ou un emplacement de génération de la signature et/ou un dispositif de génération de la signature.

11. Système selon la revendication 10, dans lequel les informations d'emplacement sont acquises par GPS, Wi-Fi ou communication avec une station de base.

12. Système selon la revendication 1, dans lequel le premier dispositif et le second dispositif ont chacun un code de dispositif unique qui est transmis à l'unité de mise en correspondance de l'autre dispositif, et l'unité de mise en correspondance est configurée pour enregistrer le code de dispositif unique dans sa mémoire pour affecter chaque dispositif paramètres de connexion et préférences de mise en correspondance.

13. Système selon la revendication 1, dans lequel le capteur MEMS est configuré pour enregistrer des données de trajectoire dans un premier plan, le dispositif d'image capture des données de trajectoire dans un second plan, et l'unité de mise en correspondance est configurée pour projeter la trajectoire dans le premier plan et la trajectoire dans le second plan sur un plan commun avant de comparer la première signature et la seconde signature.

14. Système selon la revendication 13, dans lequel le plan commun est orienté par rapport à la terre.

15. Système selon la revendication 1 comprenant en outre une unité de paquetage sur le premier dispositif et le second dispositif, l'unité de paquetage étant configurée pour paqueter la première signature et la seconde signature individuellement en une ou plusieurs sous-signatures, chaque dispositif étant en outre configuré pour transmettre sa/ses sous-signature(s) à l'autre dispositif, et l'unité de mise en correspondance étant en outre configurée pour mettre en correspondance au moins une de la ou des sous-signatures de la première signature avec la ou les sous-signatures concordantes de la seconde signature pour déterminer un ou des candidats à la mise en correspondance.

16. Système selon la revendication 15, chaque dispositif étant en outre configuré pour transmettre un sous-ensemble mutuellement exclusif de ses sous-signatures à l'autre dispositif, et l'unité de mise en correspondance sur chaque dispositif étant en outre configurée pour mettre en correspondance les sous-signatures de la première signature avec des sous-signatures concordantes de la seconde signature.

FIG 1

FIG 2

```
           ┌─────────────┐
           │    Start    │
           └──────┬──────┘
                  │
                  ▼
  ┌────────────────────────────────────┐
  │  Acquisition of the first signature│      S301
  │  and of the at least one second    │
  │  signature that are to be matched, │
  │  where the first signature is      │
  │  generated on the basis of the     │
  │  motion signature information      │
  │  corresponding thereto.            │
  └──────────────────┬─────────────────┘
                     │
                     ▼
  ┌────────────────────────────────────┐
  │  Matching of the first signature   │      S302
  │  and the second signature on the   │
  │  basis of the motion signature     │
  │  information to acquire a          │
  │  corresponding match result.       │
  └──────────────────┬─────────────────┘
                     │
                     ▼
           ┌─────────────┐
           │     End     │
           └─────────────┘
```

FIG 3

Start

Acquisition of the first signature and of the at least one second signature that are to be matched, where the first signature is generated on the basis of the motion signature information corresponding thereto.

S401

Packeting the first signature and the second signature to acquire one or more first sub-signatures and one or more second sub-signatures.

S403

Matching at least one of the one or more first sub-signatures with at least one second sub-signatures to acquire corresponding candidate matching results, then determining the matching result corresponding to the first signature and the second signature on the basis of the candidate matching results and predetermined rules

S402

End

FIG 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009320123 A
- US 2007041058 A
- US 2013050106 A